(19) Europäisches Patentamt
European Patent Office
Office européen des brevets

(11) Publication number: 0 296 410
B1

# (12) EUROPEAN PATENT SPECIFICATION

(45) Date of publication of patent specification: 09.01.91

(51) Int. Cl.$^5$: B 29 C 45/67

(21) Application number: 88109144.1

(22) Date of filing: 08.06.88

## (54) Die clamping apparatus.

(30) Priority: 22.06.87 JP 153542/87
24.06.87 JP 157154/87

(43) Date of publication of application:
28.12.88 Bulletin 88/52

(45) Publication of the grant of the patent:
09.01.91 Bulletin 91/02

(84) Designated Contracting States:
DE FR GB IT

(56) References cited:
FR-A-1 570 821
FR-A-1 570 981
FR-A-2 181 030
GB-A-2 064 415
US-A-2 976 569
US-A-3 346 924

PLASTIQUES MODERNES ET ELASTOMERES, vol. 29, no. 3, April 1977, pages 64-66, Paris, FR; R. BODINI: "Fermeture hydromécanique originale pour machine d'injection"

(73) Proprietor: MITSUBISHI JUKOGYO KABUSHIKI KAISHA
5-1, Marunouchi 2-chome Chiyoda-ku
Tokyo 100 (JP)

(72) Inventor: Kushibe, Yuki Nagoya Machinery Works of Mitsubishi
Jukogyo K.K. 1, Aza Takamichi Iwatsuka-cho
Nakamura-ku Nagoya-shi Aichi-ken (JP)
Inventor: Sato, Hiroshi Nagoya Machinery Works of Mitsubishi
Jukogyo K.K. 1, Aza Takamichi Iwatsuka-cho
Nakamura-ku Nagoya-shi Aichi-ken (JP)

(74) Representative: Henkel, Feiler, Hänzel & Partner
Möhlstrasse 37
D-8000 München 80 (DE)

EP 0 296 410 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a die clamping apparatus of the kind defined by the precharacterizing features of claim 1.

A die clamping apparatus of this kind is known from the FR-A-2 181 030. This known clamping apparatus however, lacks precise positioning of the ram in the axial direction of the tie bar insert hole, when the end surface of the half-nut or locking block opposed to the ram is brought into press contact with said ram.

Therefore, it is the object of the present invention to provide a clamping apparatus of the kind defined at the preamble allowing a precise positioning of the ram in the axial direction of the tie bar insert hole, when the end surface of the half-nut or locking block opposed to the ram is brought into press contact with said ram.

This object is attained by the characterizing features of claim 1. An advantageous development of the invention is given by the features of the subclaim.

In accordance with the invention a stopper means is provided between the other die plate and the half-nut or locking block which is adapted to adjust the movement and positioning in parallel to the axis of the tie bar insert hole, a part of the ram being made to butt against the stopper means to perform positioning of the ram in the axial direction of the tie bar insert hole.

The advantages of the present invention will become more apparent by reference to the following description of preferred embodiments of the invention taken in conjunction with the accompanying drawings.

In the accompanying drawings:

Fig. 1 is a front view of a first preferred embodiment of the present invention showing an opened state of dies;

Fig. 2 is an enlarged view of an encircled part A in Fig. 1;

Fig. 3 is a side view partly in cross-section of the portion of a half-nut in Fig. 2 as viewed in the direction of arrow B;

Fig. 4 is a front view of the same preferred embodiment but showing a closed state of dies;

Fig. 5 is a side view partly in cross-section of the portion of the half-nut in Fig. 4 as viewed in the direction of arrow C;

Fig. 6 is a front view of a second preferred embodiment of the present invention showing an opened state of dies;

Fig. 7 is an enlarged view of an encircled part A, in Fig 6;

Fig. 8 is a front view of the same preferred embodiment but showing a closed state of dies;

Fig. 9 is a side view partly in cross-section of the portion of a half-nut in Fig. 8 as viewed in the direction of arrow B.

Description of the Preferred Embodiments

Figs. 1 to 5 illustrate a first preferred embodiment of the present invention, in which reference numeral 150 designates a base for fixedly mounting the die clamping apparatus thereon. At one end of the base 150 is fixedly secured a fixed die plate 154 for mounting a fixed die 152 thereto. Reference numeral 158 designates a movable die plate, on the side faced to the fixed die plate 154 of the movable die plate 158 is mounted a movable die 156, and at the foot of the movable die plate 158 are integrally mounted slide shoes 159, which are placed on guide rails 151 disposed on the base 150 so as to be slidable in the back and forth directions along the guide rails 151. It is to be noted that the guide portions of the abovementioned movable die plate 158 could be either a sliding type guide or a rolling type guide, or else it could be of the type of floating the die plate 158 by means of air or magnetic force.

At the four corners of the above-described fixed die plate 154 are formed hydraulic cylinders 160 for generating a die clamping force after closure of dies, and each of these hydraulic cylinders 160 has oil chambers 161A and 161B therein with a ram 162 placed therebetween, as will be described later. As shown in Fig. 2 in an enlarged scale, the ram 162 has its outer circumference formed in a multi-step form having large, middle and small diameters, respectively, and has an insert hole 174 for a tie bar 164 formed therein so as to penetrate therethrough along its axis. Upon clamping dies by raising a pressure, the ram 162 is moved rightwards as viewed in Fig. 1 by feeding pressurized oil into one oil chamber 161A to make its tip end butt against a half-nut 180, and under the condition where the half-nut 180 has been meshed with the tie bar 164, the half-nut 180 is further pushed rightwards to generate a die clamping force.

On the side of the ram 162 faced to the half-nut 180, a stopper pin 193 is fixed to the ram 162, the same stopper pin 193 penetrates through a center bore 191 of a sprocket 190, double nuts 192 are mounted to the tip end portion of the stopper pin 193, and a dimension l between the surface of the ram 162 having the stopper pin 193 mounted thereon and the double nuts 192 is made finely adjustable. In other words, by presetting the abovementioned dimension l, a width of movement (cylinder stroke) of the ram 162 can be determined.

Reference numeral 164 designates a tie bar having its one end fixedly secured to the movable die plate 158 by means of a nut 165. At the tip end portion of the tie bar 164 are formed threads 172 over a predetermined length, and these threads 172 can be meshed with the half-nut 180 provided on the back side of the fixed die plate 154, upon clamping dies.

Reference numeral 166 designates a die opening/closing cylinder mounted to either the fixed die plate 154 or the movable die plate 158, and this cylinder causes the movable die plate 158 to advance or retire. Accordingly, the tip end of a rod 170 of the die opening/closing cylinder 166 is fixedly secured to the movable die plate 158 or to the fixed die plate 154.

Reference numerals 175 and 176, respectively, designate packing glands fixedly provided at the front and rear ends of the portion forming the above-described die clamping cylinder in the fixed die plate 154, to the packing gland 176 on the back side of the fixed die plate 154 is fixedly secured a guide bar 177 for supporting the half-nut 180 so as to be movable in the back and forth directions, and a threaded hole 182 is provided in the proximity of the inner circumferential portion of the packing gland 176. From the guide bar 177 fixedly secured to the packing gland 176 is slidably supported via a bracket 178 the half-nut 180, in which a nut is divided into two pieces and they are opposed as shown in Fig. 3, and this half-nut 180 is biased by a spring 179 so as to be always held in press contact with the tip end portion 163 of the ram 162. The half-nut 180 can be opened and closed in the lateral directions along a guide bar 181 fixed to the bracket 178 by an opening/closing mechanism not shown, and upon closing dies, the half-nut 180 is closed to be meshed with the threads 172 on the tie bar 164.

Reference numeral 190 designates a sprocket having the outer circumference of its boss portion threaded, and screwed into the above-described threaded hole 182 provided in the proximity of the inner circumference of the packing gland 176. This sprocket 190 is moved back and forth in the direction of arrows indicated in Fig. 1 via a chain 195 by means of a chain driving device such as a stepping motor or the like not shown.

It is to be noted that while the threads at the tip end portion of the tie bar and the half-nut on the side of the fixed die plate are employed as means for fixedly coupling a movable die plate (tie bar) and a fixed die plate with each other in the illustrated embodiment, as a matter of course, the present invention should not be limited to this type of embodiment, but instead the fixed coupling means can be constructed, for instance, by forming one or more circumferential grooves, not shown, on the tip end portion of the tie bar and employing a locking block provided with one or more projections corresponding to the circumferential grooves and engageable therewith, in place of the above-described half-nut. In essence, the fixedly coupling means employed according to the present invention is not limited to the above-described embodiment, so long as it comprises a gripping member which can be surely engaged with and disengaged from the tip end of the tie bar at a preset position and which is movable jointly with the ram with its one end butting against the ram.

Now the operation of the die clamping apparatus having the above-mentioned construction will be explained in the following.

If pressurized oil is fed into one oil chamber 168A of the die opening/closing cylinder 166, then the movable die plate 158 advances towards the fixed die plate 154 as guided by the guide rails 151, the tip end portion of the tie bar 164 passes through the tie bar insert 174 in the fixed die plate 154, and at the place where the fixed die 152 and the movable die 156 join together, the movable die plate 158 stops as shown in Fig. 4.

The sprocket 190 threadedly coupled to the packing gland 176 is preliminarily positioned by driving the chain 195, and then by applying a hydraulic pressure to the right-hand oil chamber 161B as viewed in Fig. 1, the ram 162 is moved leftwards in Fig. 4 until the right end surface of the sprocket 190 comes into contact with the double nut 192, when the ram 162 is stopped. At this time, the half-nut 180 is also moved by the distance of movement of the ram 162 as pushed by the spring 179, and it is held stopped under the condition that the tip end portion 163 of the ram 162 is kept in press contact with the left end surface of the half-nut 180. This half-nut stop position is determined by preliminarily calculating the position by means of a control device so that at the time point when the tie bar 164 has passed through the fixed die plate 154 and stopped as described above, the phase of the threads in the half-nut 180 may nearly match with that of the threads 172 on the tie bar 164. These hydraulic cylinders 160 are provided so as to respectively correspond to the four tie bars 164. Since the threads 172 of the four tie bars 164 are not always coincident in phase with one another, the phase deviation of the threads 172 at the time of finishment of closure of the dies is, if necessary, finely adjusted by means of the double nut 192.

At the moment when the closure of the dies has finished, the half-nut 180 is closed by means of a half-nut opening/closing device (not shown), and subsequently an oil pressure is applied to the left-hand oil chamber 161A of the hydraulic cylinder. Since the threads 172 of the tie bar 164 and the threads in the half-nut 180 are already held in a meshed condition at this time, the half-nut 180 is pushed rightwards by the ram tip end portion 163, thereby the tie bar 164 is drawn, and a die clamping force is generated.

When the shaping has been finished and the dies are to be opened, at first the oil pressure in the oil chamber 161A of the hydraulic cylinder 160 is lowered, subsequently the half-nut 180 is opened by means of a half-nut opening/closing device (not shown) to release the meshing with the tie bar 164, and thereafter, when pressurized oil is fed to the right-hand oil chamber 168B of the dies opening/closing cylinder 166, the movable die plate 158 is moved leftwards and the dies are opened.

Next, a second preferred embodiment of the present invention will be described with reference to Figs. 6 to 9.

Fig. 6 shows the entire assembly of the die clamping apparatus according to the second preferred embodiment of the invention. In this figure, reference numeral 250 designates a base for fixedly mounting the die clamping apparatus thereon, and at one end of the base 250 is fixedly secured a fixed die plate 254 for mounting a fixed die 252 thereon. Reference numeral 258 designates a movable die plate, on the side faced to the fixed die plate 254 of the movable die plate 258 is mounted a movable die 256, and at the foot of the movable die plate 258 are integrally mounted slide shoes 259, which are placed on guide rails 251 disposed on the base 250 so as to be slidable in the back and forth directions along the guide rails 251. It is to be noted that the guide portions of the above-mentioned movable die plate 258 could be either a sliding type guide or a rolling type guide, or else it could be of the type of floating the die plate 258 by means of air or a magnetic force.

At the four corners of the above-mentioned movable die plate 258 are formed hydraulic cylinders 260 for generating a die clamping force after closure of dies, and each of these hydraulic cylinders 260 has oil chambers 261A and 261B therein with a ram 262 placed therebetween as will be described later. As shown in Fig. 7 in an enlarged scale, the ram 262 has its outer circumference formed in a multi-step form having large, middle and small diameters, respectively, and has an insert hole 274 for a tie bar 264 formed therein so as to penetrate therethrough along its axis. Upon clamping dies by raising a pressure, the ram 262 is moved leftwards as viewed in Fig. 6 by feeding pressurized oil into one oil chamber 261A to make its tip end butt against a half-nut 280, and under the condition where the half-nut 280 has been meshed with the tie bar 264, the half-nut 280 is further pushed leftwards to generate a die clamping force.

On the side of the ram 262 faced to the half-nut 280, a stopper pin 293 is fixed to the ram 262, the same stopper pin 193 penetrates through a center bore 291 of a sprocket 290, double nuts 292 are mounted to the tip end portion of the stopper pin 293, and a dimension l between the surface of the ram 262 having the stopper pin 293 mounted thereon and the double nuts 292 is made finely adjustable. In other words, by presetting the abovementioned dimension 1, a width of movement (cylinder stroke) of the ram 262 can be determined.

Reference numeral 264 designates a tie bar having its one end fixedly secured to the movable die plate 258 by means of a nut 265. At the tip end portion of the tie bar 264 are formed threads 272 over a predetermined length, and these threads 272 can be meshed with the half-nut 280 provided on the back side of the movable die plate 258, upon clamping dies.

Reference numeral 266 designates a die opening/closing cylinder mounted to either the fixed die plate 254 or the movable die plate 258, and this cylinder causes the movable die plate 258 to advance or retire. Accordingly, the tip end of a rod 270 of the die opening/closing cylinder 266 is fixedly secured to the movable die plate 258 or to the fixed die plate 254.

Reference numerals 275 and 276, respectively, designate packing glands fixedly provided at the front and rear ends of the portion forming the above-described die clamping cylinder in the movable die plate 258, to the packing gland 275 on the back side of the movable die plate 258 is fixedly secured a guide bar 277 for supporting the half-nut 280 so as to be movable in the back and forth directions, and a threaded hole 282 is provided in the proximity of the inner circumferential portion of the packing gland 276. From the guide bar 277 fixedly secured to the packing gland 275 is slidably supported via a bracket 278 the half-nut 280, in which a nut is divided into two pieces 280a and 280b as shown in Fig. 9, and this half-nut 280 is biased by a spring 279 so as to be always held in press contact with the tip end portion 263 of the ram 262. The half-nut 280 can be opened and closed in the lateral directions along a guide bar 281 fixed to the bracket 278 by an opening/closing mechanism not shown, and upon closing dies, the half-nut 280 is closed to be meshed with the threads 272 on the tie bar 264.

Reference numeral 290 designates a sprocket having the outer circumference of its boss portion threaded, and screwed into the above-described threaded hole 282 provided in the proximity of the inner circumference of the packing gland 276. The sprocket 290 is moved back and forth in the direction of arrows indicated in Fig. 6 via a chain 295 by means of a chain driving device such as a stepping motor or the like not shown.

It is to be noted that while the threads at the tip end portion of the tie bar and the half-nut on the side of the movable die plate are employed as means for fixedly coupling a movable die plate and a fixed die plate (tie bar) with each other in the illustrated embodiment, as a matter of course, the present invention should not be limited to this type of embodiment, but instead the fixed coupling means can be constructed, for instance, by forming one or more circumferential grooves, not shown, on the tip end portion of the tie bar and employing a locking block provided with one or more projections corresponding to the circumferential grooves and engageable therewith, in place of the above-described half-nut. In essence, the fixedly coupling means employed according to the present invention is not limited to the above-described embodiment, so long as it comprises a gripping member which can be surely engaged with and disengaged from the tip end of the tie bar at a preset position and which is movable jointly with the ram with its one end butting against the ram.

Now the operation of the die clamping apparatus having the above-mentioned construction will be explained in the following.

If pressurized oil is fed into one oil chamber 268A of the die opening/closing cylinder 266, then the movable die plate 258 advances towards the fixed die plate 254 as guided by the guide rails 151, the tip end of the tie bar 264 passes through the tie bar insert hole 274 in the movable die plate 258, and at the place where the fixed die 252 and the movable die 256 join together, the movable die plate 258 stops as shown in Fig. 8.

The sprocket 290 threadedly coupled to the packing gland 275 is preliminarily positioned by driving the chain 295, and then by applying a hydraulic pressure to the left-hand oil chamber 261B as viewed in Fig. 6, the ram 262 is moved rightwards in Fig. 8 until the left end surface of the sprocket 290 comes into contact with the double nut 292, when the ram 262 is stopped. At this time, the half-nut 280 is also moved by the distance of movement of the ram 262 as pushed by the spring 279, and it is held stopped under the condition that the tip end portion 263 of the ram 262 is kept in press contact with the right end surface of the half-nut 280. This half-nut stop position is determined by preliminarily calculating the position by means of a control device so that at the time point when the tie bar 264 has passed through the movable die plate 258 and the movable die plate 258 has stopped as described above, the phase of the threads in the half-nut 280 may nearly match with that of the threads 272 on the tie bar 264. These hydraulic cylinders 260 are provided so as to respectively correspond to the four tie bars 264. Since the threads 272 of the four tie bars 264 are not always coincident in phase with one another, the phase deviation of the threads 272 at the time of finishment of closure of the die is, if necessary, finely adjusted by means of the double nut 292.

At the moment when the closure of the dies has finished, the half-nut 280 is closed by means of a half-nut opening/closing device (not shown), and subsequently an oil pressure is applied to the right-hand oil chamber 261A of the hydraulic cylinder 260. Since the threads 272 of the tie bar 264 and the threads in the half-nut 280 are already held in a meshed condition at this time, the half-nut 280 is pushed leftwards by the ram tip end portion 263, thereby the tie bar 264 is tensioned, and a die clamping force is generated.

When the shaping has been finished and the dies are to be opened, at first the oil pressure in the oil chamber 261A of the hydraulic cylinder 260 is lowered, subsequently the half-nut 280 is opened by means of a half-nut opening/closing device (not shown) to release the meshing with the tie bar 264, and thereafter, when pressurized oil is fed to the right-hand oil chamber 268B of the dies opening/closing cylinder 266, the movable die plate 258 is moved leftwards and the dies are opened.

As described in detail above, according to the present invention, the following various advantages can be attained:

(1) Owing to the fact that the threads on the tie bar are made to have a length corresponding to the variable range of thickness of the dies to be used and a fixedly coupling member for the tie bar such as a half-nut or the like is made movable and adjustable, the fixed coupling can be done at any arbitrary position, hence the stroke of the hydraulic cylinder is shortened, and reduction in size of the apparatus can be realized. In addition, the phase adjustment for the above-mentioned fixedly coupling member can be done by minute movement within a short period of time.

(2) Since the tie bar is fixedly secured to either one of the fixed die plate and the movable die plate and does not serve also as a rod of a hydraulic cylinder, the anxiety of oil leakage caused by damage of the tie bar is perfectly eliminated, and there is no need to fear hurt of the rod as is the case with the prior art.

(3) As the tie bar is fixedly secured to the movable die plate or the fixed die plate and does not rotate, there is no fear that deviation of the phase of the threads may arise.

(4) In the case where the tie bar is mounted to the movable die plate, surplus devices and parts can be omitted from the environment of the movable die plate and the structure can be simplified. Moreover, generation of troubles caused by unexpected damages of these devices and parts is reduced, and surplus power is also not necessitated, resulting in energy saving.

While a principle of the present invention has been described above in connection to preferred embodiments of the invention, it is intended that all matter contained in the above description and illustrated in the accompanying drawings shall be interpreted to be illustrative and not in a limiting sense.

**Claims**

1. A die clamping apparatus including

a fixed die plate (154, 254) for holding a fixed die (152, 252),

a movable die plate (158, 258) for holding a movable die (156, 256),

means (166, 266) for making said movable die plate (158, 258) operatively advance or retire with respect to said fixed die plate (154, 254),

means (180, 280) for fixedly coupling said movable die plate (158, 258) to said fixed die plate (154, 254) after the movable die plate (158, 258) has come close to the fixed die plate (154, 254) and the fixed die (152, 252) and the movable die (156, 256) have closed, and

tie bars (164, 264) for carrying out clamping of dies,

said tie bars (164, 264) being fixedly secured to either one of the fixed die plate (154, 254) and the movable die plate (158, 258),

a hydraulic cylinder (160, 260) having a ram (162, 262) for clamping of dies being provided on the other die plate (154, 258) not provided with the tie bars (164, 264),

said fixedly coupling means consisting of a half-nut (180, 280) or a locking block which is provided on the surface of said other die plate (154, 258) on the opposite side to the die mounting surface, which is movable in the directions nearly at right angles of a tie bar insert hole (174, 274) and which can be moved and positioned in the axial direction of said tie bar insert hole (174, 274),

threads (172, 272) or circumferential grooves being provided on the outer circumference of the tip end portion of the tie bar (164, 264) and adapted to be meshed with said half-nut (180, 280) or locking block, and

the end surface of the the half-nut (180, 280) or locking block opposed to said ram (162, 262) being brought into press contact with said ram (162, 262), at which position said half-nut (180, 280) or locking block can be positioned so as to mate with the threads (172, 272) or circumferential grooves on said tie bar (164, 264),

characterized by

a stopper means (190, 290) which is provided between said other die plate (154, 258) and said half-nut (180, 280) or locking block and adapted to perform positioning of said ram (162, 262) in the axial direction of the tie bar insert hole (174),

said stopper means being a sprocket (190, 290) having a bore (191, 291) penetrating therethrough along its axis, which is threaded on an outer circumference of its boss portion and mounted on a plate fixedly secured to said other die plate (154, 258) and having inner screw threads,

a stopper pin (193, 293) projected from an end surface of the ram (162, 262) being made to pass through the penetrating bore (191, 291) of said sprocket (190, 290),

a stepped portion (192) having a larger diameter than that of the penetrating bore (191) being formed at the tip end of the stopper pin (193, 293) projecting from said penetrating bore (191, 291) so that said stepped portion (192, 292) can be engaged with an end surface of said sprocket (190, 290), and

said half-nut (180, 280) or locking block being biased toward said ram (162, 262).

2. The clamping apparatus according to claim 1, wherein said stepped portion, for fine adjustment of the position of the stepped portion, is composed of a threaded portion at the tip end of the stopper pin (193, 293) and a nut (192, 292).

**Patentansprüche**

1. Formschließvorrichtung mit

einer feststehenden Formplatte (154, 254) zum Haltern einer feststehenden Form (152, 252),

einer beweglichen Formplatte (158, 258) zum Haltern einer beweglichen Form (156, 256),

einem Mittel (166, 266) zum positiven Vor- oder Zurückstellen der beweglichen Formplatte (158, 258) mit Bezug auf die feststehende Formplatte (154, 254),

einem Mittel (180, 280) zum Festlegen der beweglichen Formplatte (158, 258) an der festehenden Formplatte (154, 254), nachdem die bewegliche Formplatte (158, 258) nahe an die feststehende Formplatte (154, 254) herangeführt ist und die feste Form (152, 252) und die bewegliche Form (156, 256) geschlossen worden sind, und

Verbindungsstangen (164, 264) zum positiven Schließen der Formen,

wobei die Verbindungsstangen (164, 264) entweder mit derfeststehenden Formplatte (154, 254) oder mit der beweglichen Formplatte (158, 258) fest verbunden sind,

wobei ein Hydraulikzylinder (160, 260) mit einem Formenschließ-Rammbock (162, 262) auf der anderen nicht mit den Verbindungsstangen (164, 264) versehenen Formplatte (154, 258) vorgesehen ist,

wobei das aus einer Leitspindelmutter (180, 280) oder einem Sperrblock bestehende Festlegemittel auf der Fläche der anderen Formplatte (154, 258) auf der der Formmontagefläche gegenüberliegenden Seite vorgesehen ist, in den Richtungen nahe zu rechten Winkeln einer Verbindungsstangen-Einsetzöffnung (174, 274) bewegbar und in der Axialrichtung der Verbindungsstangen-Einsetzöffnung (174, 274) bewegbar und positionierbar ist,

wobei Gewindegänge (172, 272) oder umfangsmäßige Nuten auf dem Außenumfang des Vorderendabschnitts der Verbindungsstange (164, 264) vorgesehen und dazu ausgelegt sind, mit der Leitspindelmutter (180, 280) oder dem Sperrblock im Kämmeingriff zu stehen, und

wobei die dem Rammbock (162, 262) gegenüberliegende Endfläche der Leitspindelmutter (180, 280) oder des Sperrblocks in Presskontakt mit dem Rammblock (162, 262) gebracht ist, in welcher Stellung die Leitspindelmutter (180, 280) oder der Sperrblock derart positionierbar sind, daß sie mit den Gewindegängen (172, 272) oder den umfangsmäßigen Nuten auf der Verbindungsstange zusammenpassen,

gekennzeichnet durch

ein Anschlagmittel (190, 290), das zwischen der anderen Formplatte (154, 258) und der Leitspindelmutter (180, 280) oder dem Sperrblock vorgesehen ist und zum Ausführen der Positionierung des Rammblocks (162, 262) in der axialen Richtung der Verbindungststangen-Einsatzöffnung (174) dient,

wobei das Anschlagmittel ein Radzahn (190, 290) mit einer diesen entlang seiner Achse durchsetzenden Bohrung (191, 291) ist, der auf einem Außenumfang seines Wulstabschnitts mit einem Gewinde versehen und auf einer Platte angebracht ist, die mit der anderen Formplatte (154, 258) fest verbunden ist und Innengewinde aufweist,

wobei ein von einer Endfläche des Rammbocks (162, 262) vorstehender Anschlagstift (193, 293) dazu ausgelegt ist, die Durchgangsbohrung (191, 292) des Radzahns (190, 290) zu durchsetzen,

wobei ein Stufenabschnitt (192) mit einem größeren Durchmesser als derjenige der Durchgangsbohrung (191) an dem Vorderende des Abschlagstiftes (193, 293) von der Durchgangsbohrung (192, 292) vorstehend derart ausgebildet ist, daß der Stufenabschnitt (192, 292) mit einer Endfläche des Radzahns (190, 290) in Eingriff bringbar ist, und

wobei die Leitspindelmutter (180, 280) oder der Sperrblock auf den Rammbock (162, 262) zu vorgespannt sind.

2. Schließvorrichtung nach Anspruch 1, bei welcher der Stufenabschnitt zur Feineinstellung des Position des Stufenabschnitts aus einem Gewindeabschnitt am Vorderende des Anschlagstiftes (193, 293) und einer Mutter (192, 292) zusammengesetzt ist.

**Revendications**

1. Dispositif de verrouillage de moule comprenant:

une plaque de montage de moule fixe (154, 254) pour le maintien d'un moule fixe (152, 252),

une plaque de montage de moule mobile (158, 258) pour le maintien d'un moule mobile (156, 256),

un moyen (166, 266) pour faire avancer ou reculer en fonctionnement cette plaque de montage de moule mobile (158, 258) par rapport à cette plaque de montage de moule fixe (154, 254),

un moyen pour le couplage fixe de cette plaque de montage de moule mobile (158, 258) à cette plaque de montage de moule fixe (154, 254) après que la plaque de montage de moule mobile (158, 258) s'est rapprochée de la plaque de montage de moule fixe (154, 254) et que le moule fixe (152, 252) et le moule mobile (156, 256) se sont fermés et,

des tiges de raccordement (164, 264) pour effectuer le verrouillage des moules,

ces tiges de raccordement (164, 264) étant assujetties fixement, soit à la plaque de montage de moule fixe (154, 254), soit à la plaque de montage de moule mobile (158, 258),

un vérin hydraulique (160, 260) ayant un piston (162, 262) pour le verrouillage des moules étant prévu sur l'autre plaque de montage de moule (154, 258) non muni des tiges de raccordement (164, 264),

ces moyens de couplage fixe étant constitués par un demi-écrou (180, 280) ou par un bloc de verrouillage qui est prévu sur la surface de cette autre plaque de montage de moule (154, 258) du côté opposé à la surface de montage du moule, qui est mobile dans les sens pratiquement à angle droit d'un trou (174, 274) d'insertion de la tige de raccordement et qui peut être déplacé et positionné dans la direction axiale de ce trou (174, 274) d'insertion de la tige de raccordement,

des filets (172, 272) ou des rainures circonférentielles étant prévus sur la circonférence extérieure de la partie d'extrémité libre de la tige de raccordement (164, 264) et adaptés pour s'engrener avec ce demi-écrou (180, 280) ou ce bloc de verrouillage, et

la surface d'extrémité du demi-écrou (180, 280) ou du bloc de verrouillage en regard dudit piston (162, 262) étant amenée en contact de pression avec ce piston (162, 262), position pour laquelle ce demi-écrou (180, 280) ou bloc de verrouillage peut être positionné de manière à correspondre aux filets (172, 272) ou aux rainures circonférentielles de cette tige de raccordement (164, 264),

caractérisé par un moyen d'arrêt (190, 290) qui est prévu entre cette autre plaque de montage de moule (154, 258) et ce demi-écrou (180, 280) ou bloc de verrouillage et adapté pour réaliser le positionnement de ce piston (162, 262) dans la direction axiale du trou (174) d'insertion de la tige de raccordement, ce moyen d'arrêt étant un tambour denté (190, 290) présentant un alésage (191, 291) qui le pénètre selon son axe, qui est fileté sur une circonférence extérieure de sa partie protubérante et monté sur une plaque assujettie fixement à cette autre plaque de montage de moule et présentant des filetages pour vissage internes, un broche d'arrêt (193, 293) formant saillie à partir d'une surface d'extrémité du piston (162, 262) étant amenée à passer dans l'alésage (191, 291) pénétrant ce tambour denté (190, 290), une partie en gradin (192) ayant un diamètre supérieur à celui de l'alésage pénétrant (191) étant ménagée sur l'extrémité libre de la broche d'arrêt (193, 293) faisant saillie sur cet alésage pénétrant (191, 291) de telle sorte que cette partie en gradin (192, 292) puisse venir en prise avec une surface d'extrémité de cette roue dentée (190, 290), et ce demi-écrou (180, 280) ou ce bloc de verrouillage étant poussés en direction de ce piston (162, 262).

2. Dispositif de verrouillage selon la revendication 1, caractérisé par le fait que cette partie en gradin, en vue de permettre le réglage fin de la position de la partie en gradin, est composée d'une partie filetée sur la pointe d'extrémité de la broche d'arrêt (193, 293) et d'un écrou (192, 292).

Fig. 1

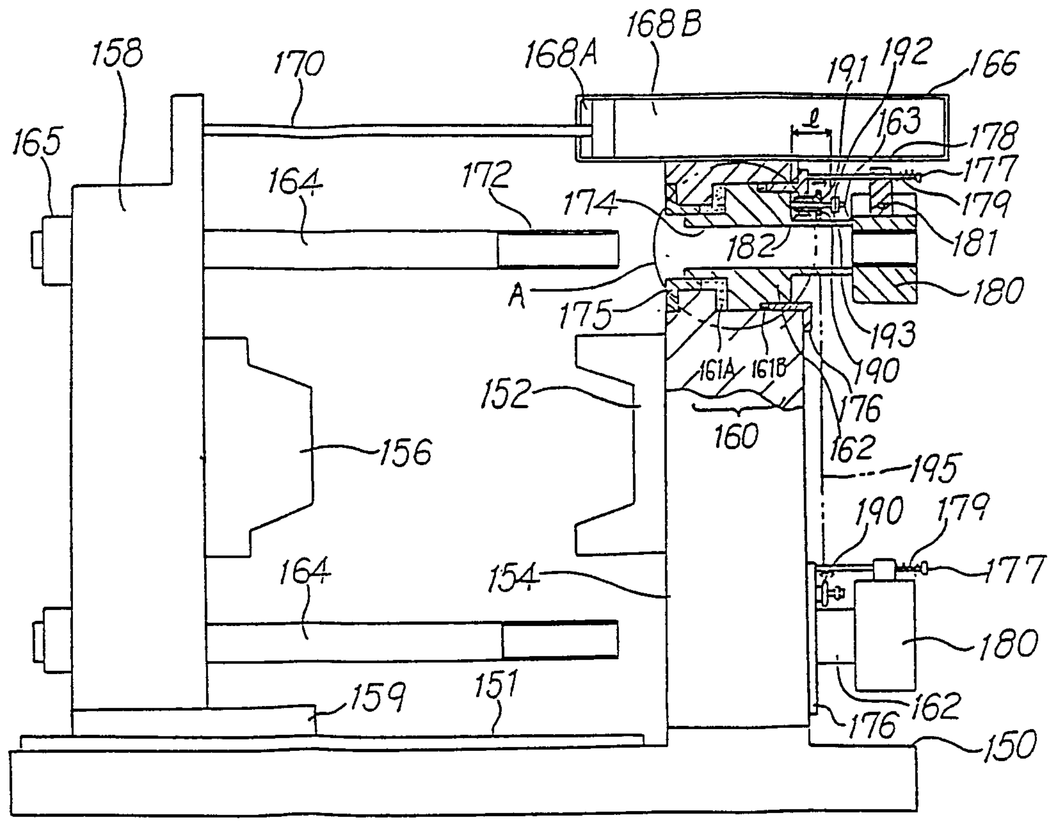

158
170
168A
168B
191
192
166
165
164
172
174
163
178
177
179
181
180
182
A
175
193
190
161A
161B
176
152
160
162
156
195
190
179
177
154
164
180
159
151
176
162
150

Fig. 2

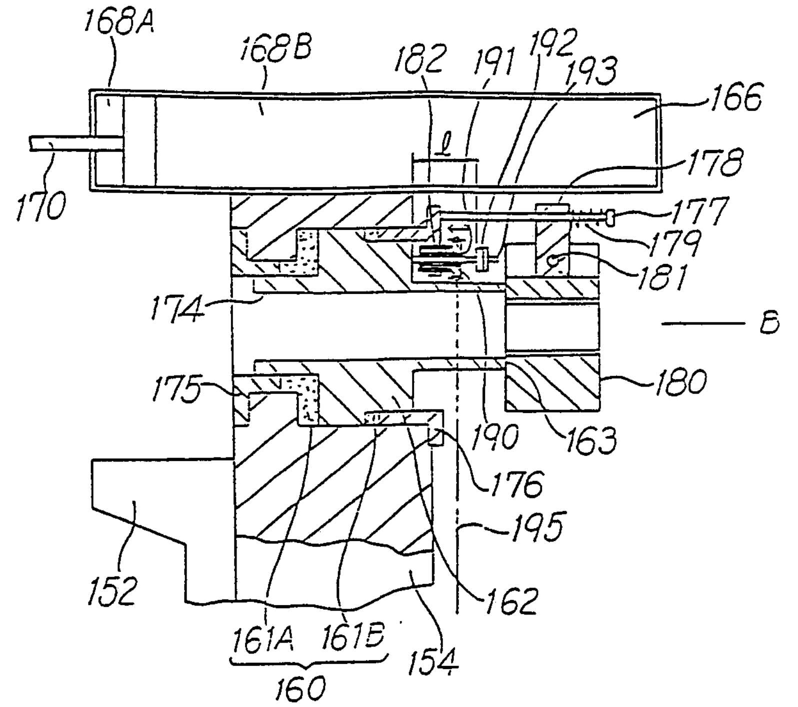
168A
168B
182
191
192
193
166
178
177
179
181
170
174
B
175
180
190
163
176
195
152
162
161A
161B
154
160
l

Fig. 3

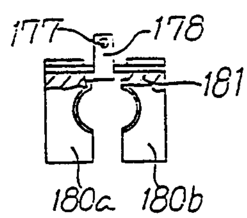
177
178
181
180a
180b

Fig. 4

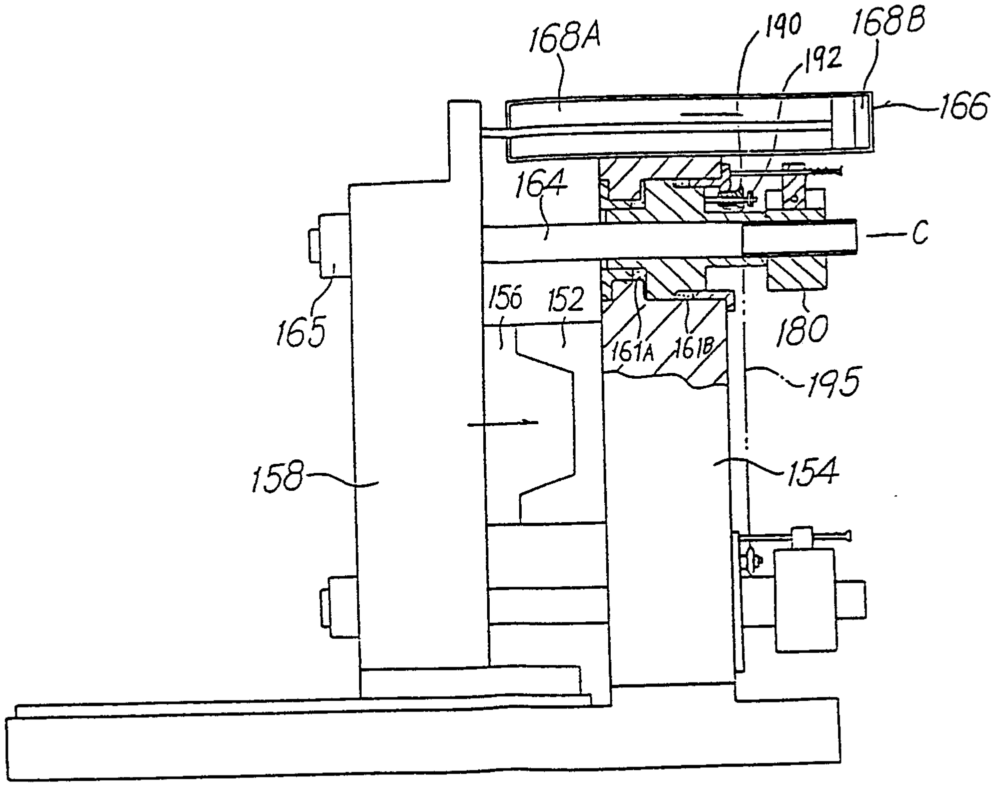
168A
190
168B
192
166
164
C
165
156
152
180
161A
161B
195
158
154

Fig. 5

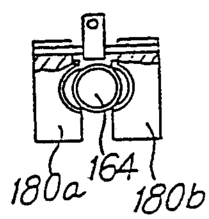
164
180a
180b

Fig. 6

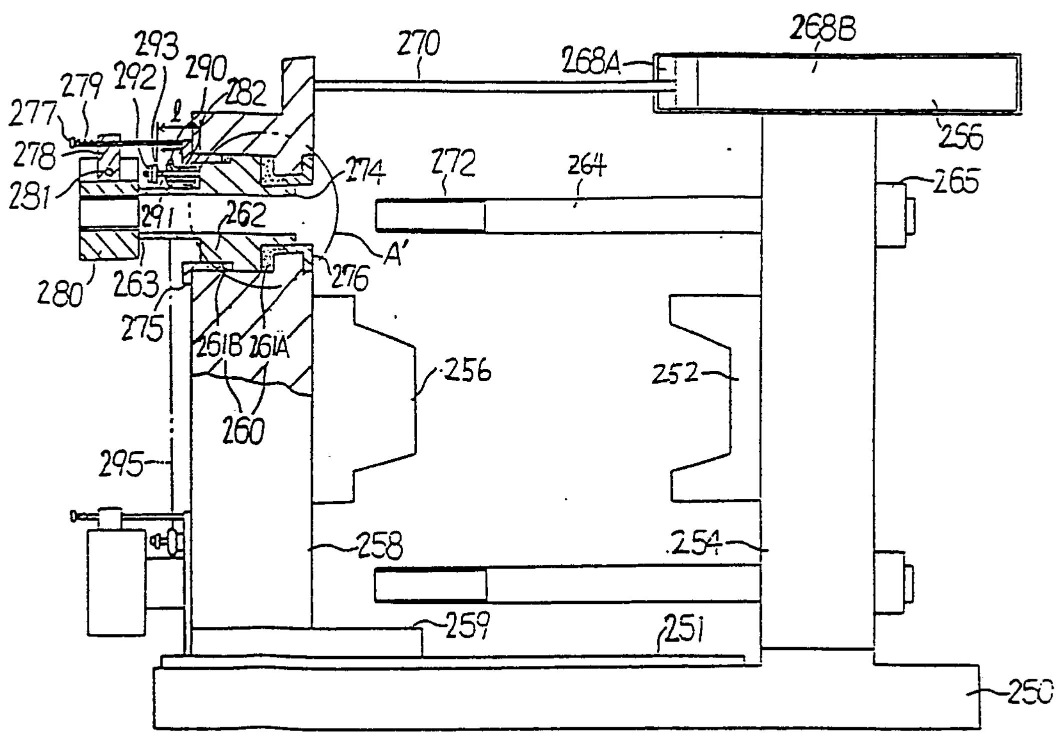
293
279
292
290
277
282
278
281
291
262
274
272
264
270
268A
268B
256
265
A'
280
263
276
275
261B
261A
260
256
252
295
258
254
259
251
250

Fig. 7

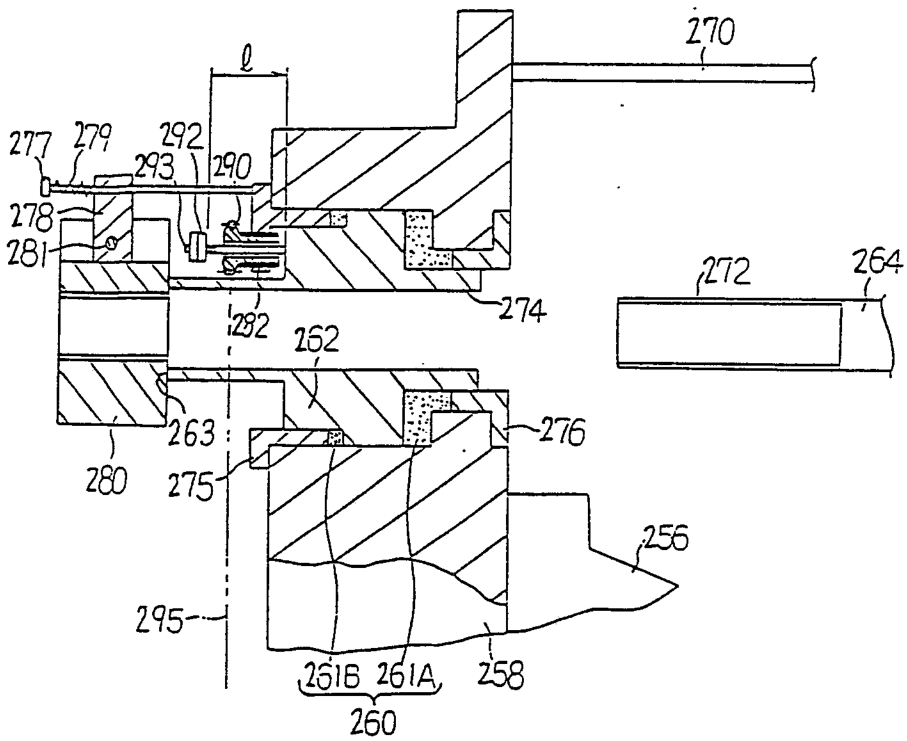
270
277
279
292
293
290
278
281
274
272
264
282
262
263
276
280
275
256
295
261B
261A
258
260

Fig. 9

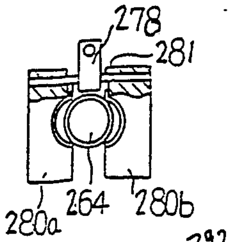
278
281
280a
264
280b

Fig. 8

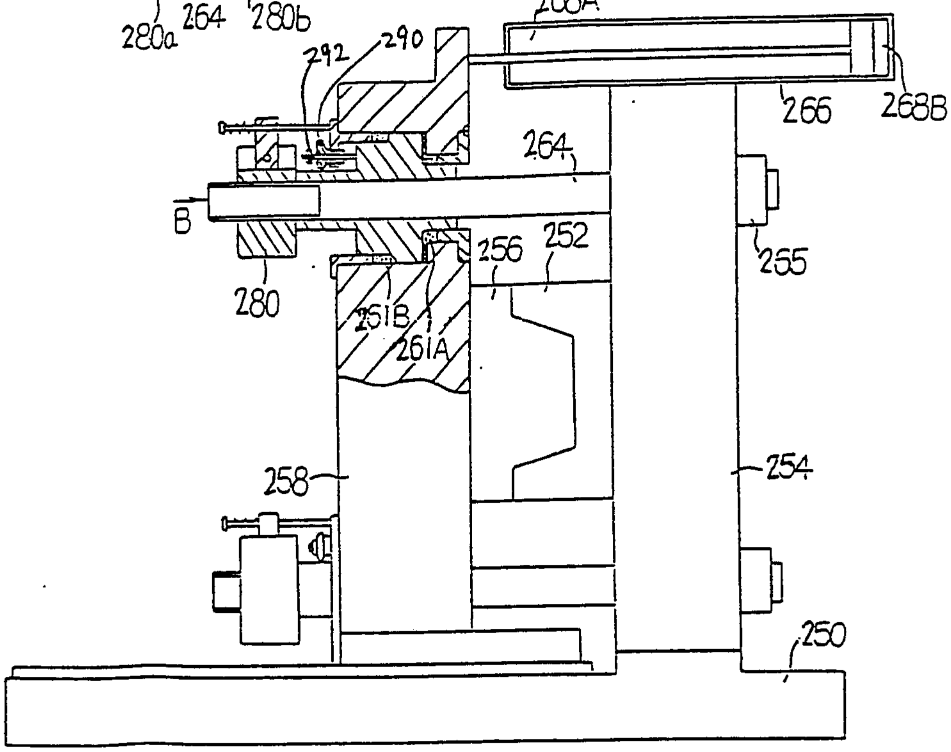
268A
292
290
266
268B
264
B
256
252
255
280
251B
261A
258
254
250

Fig. 10

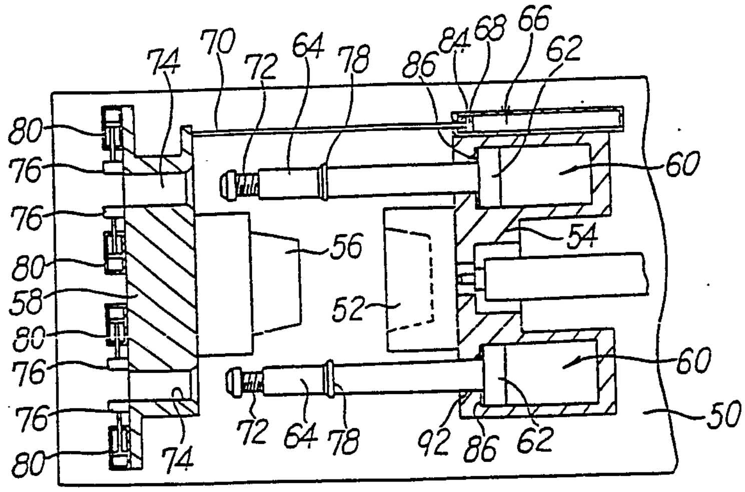
74
70
72
64
78
86
84
68
66
62
80
76
76
80
58
80
76
76
80
56
52
54
60
60
50
72
64
78
92
86
62
74